# FASCICULE DE BREVET EUROPEEN

(11) **EP 3 069 005 B1**
(45) Date de publication et mention de la délivrance du brevet: **28.02.2018**
(21) Numéro de dépôt: 14802330.2
(22) Date de dépôt: 04.11.2014
(51) Int. Cl.: F02M 57/00, G01D 5/165

(54) **INJECTEUR DE CARBURANT**
KRAFTSTOFFEINSPRITZER
FUEL INJECTOR

(30) Priorité: 12.11.2013 FR 1361006
(43) Date de publication de la demande: 21.09.2016
(73) Titulaire: Delphi International Operations Luxembourg S.à r.l., 4940 Bascharage (LU)
(72) Inventeur: MOREAU, Christophe, F-41260 La Chausséee St Victor (FR); THIBAULT, Thierry, F-37530 Saint Ouen les Vignes (FR); COCHET, Thierry, F-41190 Molineuf (FR); BEDUNEAU, Jean-Luc, F-41000 Blois (FR); LEGRAND, Philippe, F-41350 St Gervais la Forêt (FR)
(74) Mandataire: Delphi France SAS
(86) Numéro de dépôt international: PCT/EP2014/073662
(87) Numéro de publication internationale: WO 2015/071132

(56) Documents cités:
- WO-A1-94/12788
- DE-A1- 10 313 623
- DE-A1- 10 319 329
- DE-A1-102011 016 168

## Description

### DOMAINE TECHNIQUE

La présente invention se rapporte à un injecteur de carburant et plus particulièrement à un arrangement permettant un contrôle en boucle fermée d'un système d'injection.

### ARRIERE-PLAN TECHNOLOGIQUE DE L'INVENTION

Sur les injecteurs de carburant à rampe commune d'aujourd'hui, la quantité de carburant injectée et les délais d'ouverture et fermeture de l'injecteur sont dépendants de la capacité des moyens industriels de production à produire les injecteurs tout en respectant les paramètres clefs de l'injecteur. Par conséquent, des dispersions existent. De plus lors des cycles de fonctionnement des injecteurs de carburant, certains paramètres dérivent à cause de l'usure des composants. DE102011016168 divulgue un injecteur de l'art antérieur. On peut citer comme dérive les temps de monté et descente de la valve de contrôle ainsi que ceux de l'aiguille de la buse d'injection. Les stratégies de contrôle des injecteurs implémentées aujourd'hui dans les calculateurs électroniques de contrôle des injecteurs ne savent pas compenser l'ensemble des déviations. Lorsque l'injecteur est nouveau, un facteur de correction est appliqué pour corriger les principales déviations de délais d'ouverture et fermeture de l'aiguille de la buse d'injection contrôlée par la valve de contrôle électromagnétique. D'autres corrections visant à ajuster les pulses de commande de l'actionneur électromagnétique sont basées sur des capteurs d'accélération. D'autres étapes pour corriger les dérives des paramètres clefs des injecteurs consistent également à surveiller le signal de tension de l'actionneur qui reflète la fermeture de la valve de contrôle. Cependant la fonction de transfert entre l'ouverture et la fermeture de la valve de contrôle et l'ouverture et la fermeture de l'aiguille de la buse d'injection dépend de nombreux paramètres non contrôlés durant la vie d'un véhicule et selon son usage. Il est donc important de proposer une solution nouvelle résolvant ces problèmes.

### RESUME DE L'INVENTION

La présente invention vise à remédier aux inconvénients des solutions existantes en proposant une supervision électrique de l'injecteur reflétant les mouvements de l'aiguille d'injection de l'injecteur.

Un injecteur de carburant comprend des composants métalliques fixes, notamment un corps d'injecteur, un actionneur à solénoïde muni d'un ressort de maintien d'une tige de valve de contrôle, un corps de valve de contrôle comprenant un siège de la tige de la valve de contrôle, une entretoise entre le corps de la valve de contrôle et une buse d'injection, une chambre de commande, et un siège d'aiguille d'injection. Un injecteur de carburant comprend également des composants métalliques mobiles notamment la tige de la valve de contrôle et son armature et l'aiguille d'injection. L'actionneur à solénoïde comprend également des fils de commande communiquant à l'extérieur de l'injecteur grâce à un connecteur agencé sur le corps de l'injecteur. Les surfaces des composants métalliques en contact les uns avec les autres sont des surfaces de contact. Des revêtements de surface résistifs sont agencés sur plusieurs surfaces de contact. La résistivité électrique globale de l'injecteur entre le corps de l'actionneur à solénoïde et le corps de l'injecteur varie d'au moins trois valeurs ohmiques distinctes par intermittence suivant la cinétique de son aiguille d'injection. La résistivité électrique globale de l'injecteur est modélisable suivant une topologie d'un circuit électrique composée de résistances électriques mises en série équivalentes aux surfaces de contact des composants métalliques mis en contact entre eux et agencés les uns sur les autres, de résistance électriques mises en parallèle équivalentes aux surfaces de contact des composants métalliques mis en contact entre eux et agencés les uns dans les autres et d'interrupteurs équivalents aux contacts intermittents tels que par exemple le contact entre l'aiguille d'injection et son siège. Les contacts intermittents varient la valeur de la résistivité électrique globale par intermittence suivant la cinétique des composants mobiles de l'injecteur. La topologie d'un circuit électrique est la structure de connexion des différents composants du circuit électrique, à savoir dans les cas décrits par l'invention: des résistances électriques et des interrupteurs. Selon l'invention, les revêtements de surface résistifs sont localisés sur au moins une surface de contact entre le siège de l'aiguille d'injection et l'aiguille d'injection, sur au moins une surface de contact entre le corps de la buse d'injection et l'aiguille d'injection, sur au moins une surface de contact entre l'aiguille d'injection et l'entretoise, sur au moins une surface de contact entre le corps de la buse d'injection et l'entretoise, sur au moins une surface de contact entre le corps de l'injecteur et le corps de la valve de contrôle, et sur au moins une surface de contact entre le corps de l'injecteur et le corps de l'actionneur à solénoïde. L'injecteur comprenant les revêtements de surface résistifs agencés selon l'invention est modélisable suivant un premier circuit électrique équivalent comprenant un premier point de contact équivalent au potentiel électrique du corps de la buse d'injection et du corps de l'injecteur, un deuxième point de contact équivalent au potentiel électrique du siège de l'aiguille d'injection, un troisième point de contact équivalent au potentiel électrique de l'aiguille d'injection, un quatrième point de contact équivalent au potentiel électrique de l'entretoise, du corps de la valve de contrôle, de l'actionneur à solénoïde, et du plafond de la chambre de commande, un premier interrupteur connecté entre le premier point de contact et le deuxième point de contact, une première résistance connectée entre le deuxième point de contact et le troisième point de contact, une deuxième résistance connectée entre le premier point de contact et le troisième point de contact, une troisième résistance connectée entre le troisième point de contact et le quatrième point de contact, un deuxième interrupteur connecté entre le troisième point de contact et le quatrième point de contact, une quatrième résistance connectée entre le premier point de contact et le quatrième point de contact, une cinquième résistance connectée entre le premier point de contact et le quatrième point de contact, et une sixième résistance connectée entre le premier point de contact et le quatrième point de contact. Le circuit équivalent présente la résistivité électrique globale de l'injecteur entre le quatrième point de contact et le premier point de contact. La résistivité équivalente globale varie en fonction de la position de l'aiguille d'injection. Une résistance électrique additionnelle peut-être connectée entre le corps de l'actionneur à solénoïde et un de ses fils de commande, ledit fil de commande étant le fil de mesure de la résistivité électrique globale. Alternativement un circuit électrique à topologie parallèle est connecté entre le corps de l'actionneur et un des fils de commande de l'actionneur, ledit fil de commande étant le fil de mesure de la résistivité électrique globale. Ledit circuit électrique parallèle comprend une première résistance électrique en série avec une première diode et une seconde résistance électrique en série avec une deuxième diode montée en sens opposé à la première diode. Alternativement un fil est connecté au corps de l'actionneur à solénoïde, ledit fil rejoignant la partie extérieure de l'injecteur est le fil de mesure de la résistivité électrique globale.

Selon un mode de réalisation, les revêtements de surface résistifs sont localisés sur au moins une surface de contact entre le siège de l'aiguille d'injection et l'aiguille d'injection, sur au moins une surface de contact entre le corps de la buse d'injection et l'aiguille d'injection, sur au moins une surface de contact entre le corps de la buse d'injection et l'entretoise, et sur au moins une surface de contact entre l'entretoise et le corps de la valve de contrôle. Avantageusement l'injecteur comprenant les revêtements de surface résistifs agencés suivant le mode de réalisation ainsi décrit est modélisable suivant deuxième circuit électrique équivalent comprenant un premier point de contact équivalent au potentiel électrique de l'aiguille d'injection, de l'entretoise et du mur de la chambre de commande, un deuxième point de contact équivalent au potentiel électrique du siège de l'aiguille d'injection, un troisième point de contact équivalent au potentiel électrique du corps de la buse d'injection et du plafond de la chambre de commande, un premier interrupteur connecté entre le premier point de contact et le troisième point de contact, un deuxième interrupteur connecté entre le deuxième point de contact et le troisième point de contact, une première résistance connectée entre le premier point de contact et le deuxième point de contact, une deuxième résistance connectée entre le premier point de contact et le troisième point de contact, une troisième résistance connectée entre le premier point de contact et le troisième point de contact, et une quatrième résistance connectée entre le premier point de contact et le troisième point de contact. Le circuit équivalent présente la résistivité électrique globale de l'injecteur entre le premier point de contact et le troisième point de contact. La résistivité équivalente globale varie en fonction de la position de l'aiguille d'injection. Une résistance électrique additionnelle peut-être connectée entre le mur de la chambre de commande et un des fils de commande de l'actionneur à solénoïde, ledit fil de commande étant le fil de mesure de la résistivité électrique globale. Alternativement un circuit électrique à topologie parallèle est connecté entre le mur de la chambre de commande et un des fils de commande de l'actionneur, ledit fil de commande étant le fil de mesure de la résistivité électrique globale. Ledit circuit électrique parallèle comprend une première résistance électrique en série avec une première diode et une seconde résistance électrique en série avec une deuxième diode montée en sens opposé à la première diode. Alternativement un fil est connecté au mur de la chambre de commande ledit fil rejoignant la partie extérieure de l'injecteur est le fil de mesure de la résistivité électrique globale.

Le corps de l'injecteur peut-être une référence de masse électrique de la mesure de la résistivité électrique globale. Les revêtements de surface résistifs peuvent avoir une épaisseur comprise entre 1 µm et 5 µm. Les revêtements de surface résistifs peuvent avoir une rigidité comprise entre 1 GPa et 35 GPa. Les revêtements de surface résistifs peuvent être de la famille des carbones amorphes (a-C) ou de céramique. L'insertion d'un revêtement de surface de type céramique présente l'avantage de procurer une valeur résistive plus reproductible qu'un revêtement de type résine.

Une méthode de mesure de la position et de la vitesse de l'aiguille d'injection ainsi que de l'usure des revêtements de surface résistifs de l'injecteur de carburant réalisé suivant l'invention peut comprendre les étapes suivantes:
- détecter une première valeur ohmique de la résistivité électrique globale,
- déterminer la position de l'aiguille d'injection par comparaison de la première valeur ohmique de la résistivité électrique globale détectée avec les 3 valeurs ohmiques possible de la résistivité électrique globale,
- déterminer l'usure des revêtements de surface résistifs par comparaison de la première valeur ohmique de la résistivité électrique globale détectée avec les 3 valeurs ohmiques possible de la résistivité électrique globale,
- détecter une deuxième valeur ohmique de la résistivité électrique globale différente de la première valeur ohmique de la résistivité globale détectée,
- déterminer l'écoulement temporel entre la détection de la première et de la deuxième valeur ohmique de la résistivité électrique globale, et
- déterminer la vitesse de déplacement de l'aiguille d'injection (38).

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- La figure 1 est une représentation d'un injecteur de carburant selon un premier exemple de mode de réalisation de la présente invention.
- La figure 2 est un bloc diagramme schématique illustrant un réseau résistif électrique équivalent de l'injecteur selon la figure 1.
- La figure 3 est un chronogramme d'évolution de la résistivité équivalente de l'injecteur selon la figure 2 et selon la cinétique de l'aiguille d'injection.
- La figure 4 est un bloc diagramme schématique illustrant un autre réseau résistif électrique équivalent de l'injecteur suivant un deuxième mode de réalisation.
- La figure 5 est un autre chronogramme d'évolution de la résistivité équivalente de l'injecteur selon la figure 4 et selon la cinétique de l'aiguille d'injection.

### DESCRIPTION DES MODES DE REALISATION PREFERES

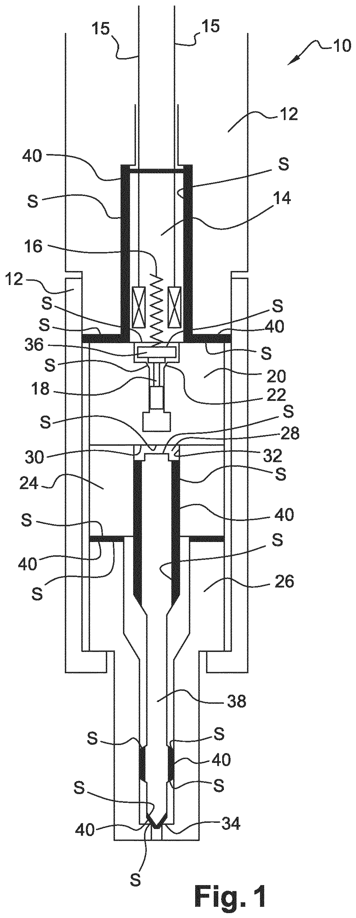

Selon la figure 1, un injecteur de carburant 10 est un assemblage de composants métalliques comprenant des composants fixes et des composants mobiles. Les composants fixes essentiels d'un injecteur comprennent notamment un corps d'injecteur 12, un actionneur à solénoïde 14 muni d'un ressort de maintien 16 d'une tige de valve de contrôle 18, un corps de valve de contrôle 20 comprenant un siège de la tige de la valve de contrôle 22, une entretoise 24 entre le corps de la valve de contrôle 20 et une buse d'injection 26, une chambre de commande 28 comprenant un plafond 30 et un mur 32, et un siège d'aiguille d'injection 34. Les composants mobiles de l'injecteur comprennent notamment la tige de la valve de contrôle 18, l'armature 36 de la valve de contrôle solidaire à la tige de la valve de contrôle 18 et l'aiguille d'injection 38. Les composants mobiles de l'injecteur sont commandés par le biais des fils de commande 15 de l'actionneur à solénoïde communiquant à l'extérieur de l'injecteur grâce à un connecteur agencé sur l'injecteur 10.

Les composants fixes ont bien évidemment des surfaces en contact les uns avec les autres, dites surfaces de contact S. Les composants mobiles ont également des surfaces en contact avec des composants fixes de l'injecteur, dites également surfaces de contact S. Les composants mobiles ont également des surfaces venant en contact de façon intermittente avec d'autres surfaces de l'injecteur 10, dites également surfaces de contact S. Pour la bonne compréhension de ces différents contacts, on citera par exemple les surfaces de contact S entre deux composants fixes telle que les surfaces de contact S entre le corps de l'actionneur à solénoïde 14 et le corps de la valve de contrôle 20 et également par exemple les surface de contact S entre le corps de la valve de contrôle 20 et l'entretoise 24, l'entretoise 24 ayant une surface en contact avec la chambre de commande 28. On citera également par exemple les surfaces de contact S entre un composant mobile et un composant fixe telle que les surfaces de contact S entre l'aiguille d'injection 38 et son siège 34, et également les surfaces de contact S entre l'aiguille d'injection 38 et le plafond de la chambre de commande 30. Le contact entre l'aiguille d'injection 38 et son siège 34 est établi lors des phases de non injection. L'aiguille d'injection 38 est en position fermée. Le contact entre l'aiguille d'injection 38 et le plafond de la chambre de commande 30 est établi lorsque l'aiguille d'injection 38 est en position de butée haute, c'est à dire en fin de course montante lors de l'injection de carburant. L'aiguille d'injection 38 est également en contact permanent avec la buse d'injection 26 dans laquelle elle effectue son mouvement de va et vient. Ce mouvement implique que ni le contact de l'aiguille d'injection 38 avec le plafond de la chambre de commande 30 et ni le contact de l'aiguille d'injection 38 avec son siège 34 sont établis lors de cette course. La tige de la valve de contrôle 18 a également une surface en contact intermittent avec son siège 22. Le contact entre la tige de la valve de contrôle 18 et son siège 22 est établi lorsque la valve de contrôle est fermée. La tige de la valve de contrôle 18 a un contact permanent avec le ressort de maintien 16 de l'actionneur à solénoïde. On notera que l'armature 36 de la valve de contrôle, solidaire de la tige de la valve de contrôle 18, a également un contact avec le corps de l'actionneur à solénoïde 14. Le contact entre l'armature 36 de la valve de contrôle et le corps de l'actionneur à solénoïde 14 est établi lorsque la valve de contrôle est ouverte et que l'armature 36 de la valve de contrôle est en butée haute. Lors de la course d'ouverture et de fermeture de la valve de contrôle, le contact entre l'armature 36 de la valve de contrôle et le corps de l'actionneur à solénoïde 14 et le contact entre la tige de la valve de contrôle 18 et son siège 22 ne sont donc pas établis. L'ensemble des surfaces de contact S entre les différents composants métalliques de l'injecteur 10 présente une résistivité électrique quasi nulle.

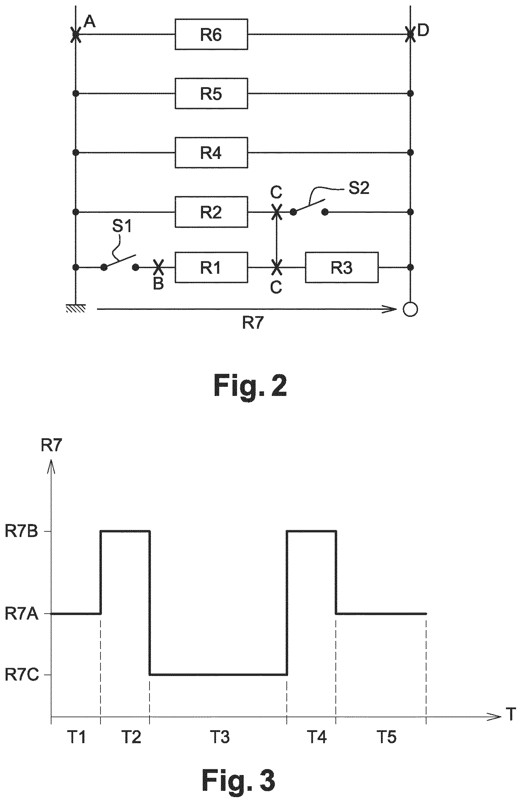

Selon les figures 1, 2 et 3 l'invention consiste à agencer des revêtements de surface résistifs 40 sur plusieurs surfaces de contact S de l'injecteur 10 et à associer à la résistivité électrique globale R7 de l'injecteur 10 mesurée entre le corps de l'actionneur à solénoïde 14 et le corps de l'injecteur 12 au moins 3 valeurs ohmiques de résistivité électrique globale, de préférence distinctes, R7A, R7B et R7C, variant en fonction de la cinétique des composants mobiles tels que par exemple l'aiguille d'injection 38 ou la tige de la valve de contrôle 18. L'introduction des revêtements de surface résistifs 40 ayant des caractéristiques techniques telles que par exemple la résistivité électrique, permet de modéliser l'injecteur 10 par au moins un circuit électrique résistif équivalent (fig. 2). On trouvera par exemple dans la topologie du circuit électrique équivalent à la résistivité électrique globale R7 de l'injecteur 10 des résistances électriques mises en série équivalentes aux surfaces de contact S des composants métalliques mis en contact entre eux, revêtus des revêtements de surface résistifs 40 et agencés les uns sur les autres. On trouvera également des résistances électriques mises en parallèles équivalentes aux surfaces de contact S des composants métalliques mis en contact entre eux, revêtus des revêtements de surface résistifs 40 et agencés les uns dans les autres. On trouvera également des interrupteurs électriques équivalents aux contacts intermittents, les interrupteurs étant fermés si le contact est établi. L'interrupteur est ouvert si le contact n'est pas établi. La résistivité des contacts permanents ou établis pourra être quasi-nulle si leurs surfaces de contact S ne sont pas revêtues des revêtements de surface résistifs 40. A contrario, la résistivité des contacts permanents et des contacts établis sera à l'image du revêtement de surface résistif 40 qui les recouvre. De préférence, les contacts permanents et les contacts établis recouverts de revêtements de surface résistifs 40 peuvent être assimilables à des résistances électriques ayant des valeurs allant de l'ordre de l'ohm jusqu'à la centaine de kilo-ohms suivant le mode de réalisation de l'invention.

Les revêtements de surface résistifs 40 ont de préférence une épaisseur de quelques µm, par exemple une épaisseur comprise entre 1 µm et 5 µm. Leur rigidité, comparable à celle de l'acier, voire supérieure, est de l'ordre du Giga Pascal (GPa), de préférence comprise entre 1 GPa et 35 GPa. Afin de répondre aux caractéristiques techniques mentionnées telles que la résistivité électrique et la rigidité de ces revêtements de surface résistifs 40, on peut identifier de préférence des revêtements de surface résistifs 40 à base de carbone amorphe (a-C) plus couramment appelé 'DLC' (Diamond Like Carbon) et également des revêtements de type céramique. Les surfaces de contact S pourront être revêtues chacune indépendamment les unes des autres de type différents de revêtements de surface.

Selon un premier mode de réalisation illustré par la figure 1, de préférence, les revêtements de surface résistifs 40 sont localisés:
- sur au moins une surface de contact S entre le siège 34 de l'aiguille d'injection 38 et l'aiguille d'injection 38, rendant ainsi le contact intermittent de l'aiguille d'injection 38 avec son siège 34 résistif lorsque le contact est établi,
- sur au moins une surface de contact S entre le corps de la buse d'injection 26 et l'aiguille d'injection 38,
- sur au moins une surface de contact S entre l'aiguille d'injection 38 et l'entretoise 24,
   la résistivité mesuré entre l'aiguille d'injection 38 et l'entretoise 24 étant celle du revêtement de surface résistif 40 lorsque l'aiguille d'injection 38 n'est pas en contact avec le plafond de la chambre de commande 30, dans le cas contraire, lorsque l'aiguille d'injection 38 est en contact avec le plafond de la chambre de commande 30, la résistivité mesuré entre l'aiguille d'injection 38 et l'entretoise 24 est quasi nulle,
- sur au moins une surface de contact S entre le corps de la buse d'injection 26 et l'entretoise 24,
- sur au moins une surface de contact S entre le corps de l'injecteur 12 et le corps de la valve de contrôle 20,
- sur au moins une surface de contact S entre le corps de l'injecteur 12 et le corps de l'actionneur à solénoïde 14.

Il est à noter que la résistivité électrique entre le corps de l'injecteur 12 et le corps de la buse d'injection 36 est quasi-nulle. Cela signifie qu'il n'y a pas de revêtement de surface résistif entre ces pièces métalliques. Alternativement un revêtement de surface non résistif ou de résistance très faible, c'est-à-dire à valeur ohmique nulle ou très faible, comme par exemple ayant une résistivité maximale de l'ordre de l'ohm, peut être agencé entre ces deux pièces métalliques pour des raisons de protection contre l'usure prématurée des pièces métalliques. Il est à noter que la résistivité électrique est également quasi nulle entre le corps de l'actionneur à solénoïde 14 et le corps de la valve de contrôle 20, entre le corps de la valve de contrôle 20 et l'entretoise 24 et également entre le corps de la valve de contrôle 20 et le plafond de la chambre de commande 30. Cela signifie qu'il n'y a pas de revêtement de surface résistif entre ces pièces métalliques. Alternativement un revêtement de surface non résistif ou de résistance très faible, c'est-à-dire à valeur ohmique nulle ou très faible, comme par exemple ayant une résistivité maximale de l'ordre de l'ohm, peut être agencé entre ces pièces métalliques pour des raisons de protection contre l'usure prématurée des pièces métalliques.

La figure 2 représente un premier exemple de la modélisation de la résistivité électrique globale équivalente R7 de l'injecteur de carburant 10 selon l'agencement des revêtements de surface résistifs sur les surfaces de contact S présenté selon le premier mode de réalisation illustré par la figure 1. Conformément à la figure 2, le circuit électrique équivalent de l'injecteur 10, comprend un premier point A de contact équivalent au potentiel électrique du corps de la buse d'injection 26 et du corps de l'injecteur 12, un deuxième point B de contact équivalent au potentiel électrique du siège de l'aiguille d'injection 34, un troisième point C de contact équivalent au potentiel électrique de l'aiguille d'injection 38, un quatrième point D de contact équivalent au potentiel électrique de l'entretoise 24, du corps de la valve de contrôle 20, du corps de l'actionneur à solénoïde 14, et du plafond de la chambre de commande 30, un premier interrupteur S1 connecté entre le premier point A de contact et le deuxième point B de contact, une première résistance R1 connectée entre le deuxième point B de contact et le troisième point C de contact, une deuxième résistance R2 connectée entre le premier point A de contact et le troisième point C de contact, une troisième résistance R3 connectée entre le troisième point C de contact et le quatrième point D de contact, un deuxième interrupteur S2 connecté entre le troisième point C de contact et le quatrième point D de contact, une quatrième résistance R4 connectée entre le premier point A de contact et le quatrième point D de contact, une cinquième résistance R5 connectée entre le premier point A de contact et le quatrième point D de contact, et une sixième résistance R6 connectée entre le premier point A de contact et le quatrième point D de contact. La résistivité électrique globale R7 de l'injecteur 10 est donc mesurable entre le quatrième point D de contact et le premier point A de contact. Afin de faciliter la mesure de la résistivité électrique globale R7 de cette configuration, le corps de l'injecteur 12 peut faire office de masse électrique.

Telle que décrite au travers de la figure 3, la résistivité électrique globale R7 de la première topologie illustrée par la figure 2 varie en fonction de la position de l'aiguille d'injection 38. Une première valeur R7A de la résistivité électrique globale R7 est mesurable lorsque l'aiguille d'injection 38 est en contact avec son siège 34. L'injecteur 10 est dit en position fermé. Cela se produit lors d'une première phase T1 en début de cycle d'injection et lors d'une cinquième phase T5 en fin de cycle d'injection. Durant la première phase T1 et la cinquième phase T5, le premier interrupteur S1 est fermé puisque l'aiguille d'injection 38 est en contact avec son siège 34, alors que le deuxième interrupteur S2 est ouvert puisque l'aiguille d'injection 38 n'est pas en contact avec le plafond de la chambre de commande 30. Lorsque l'aiguille d'injection 38 effectue sa course vers le plafond de la chambre de commande 30, une deuxième valeur R7B de la résistivité électrique globale R7 est mesurable. L'injecteur 10 est alors dans une deuxième phase T2 correspondant au régime de début d'injection. Durant la deuxième phase T2, le premier interrupteur S1 est ouvert puisque l'aiguille d'injection 38 n'est plus en contact avec son siège 34, et le deuxième interrupteur S2 est également ouvert puisque l'aiguille d'injection 38 n'est pas en contact avec le plafond de la chambre de commande 30.

Lorsque l'aiguille d'injection 38 a terminé sa course en butée haute avec le plafond de la chambre de commande 30, l'injecteur 10 est dans une troisième phase T3 en régime établi d'injection. Durant cette troisième phase T3, une troisième valeur R7C de la résistivité électrique globale R7 est mesurable. Durant cette troisième phase T3, le premier interrupteur S1 est ouvert puisque l'aiguille d'injection 38 n'est plus en contact avec son siège 34, et le deuxième interrupteur S2 est fermé puisque l'aiguille d'injection 38 est en contact avec le plafond de la chambre de commande 30. Lorsque l'injecteur 10 est en régime de fin d'injection, l'aiguille d'injection 38 effectue une course allant du plafond de la chambre de commande 30 vers son siège 34. L'injecteur 10 est dans une quatrième phase T4. Durant cette quatrième phase T4 la valeur de la résistivité électrique globale R7 est équivalente à la deuxième valeur R7B identifiée lors de la phase de début d'injection puisque le premier interrupteur S1 et le deuxième interrupteur S2 sont ouverts, l'aiguille d'injection 38 n'étant ni en contact avec son siège 34, ni en contact avec le plafond de la chambre de commande 30.

Afin d'accéder à la mesure de la résistivité électrique globale R7 de l'injecteur 10 dont les revêtements de surface résistifs 40 ont été disposés tels que décrit ci-dessus, de préférence plusieurs solutions sont applicables. Il est à noter que quel que soit la solution permettant d'accéder à la mesure de la résistivité électrique globale R7, le moyen associé à cette mesure induira un courant électrique au travers de la résistivité électrique globale R7, cela signifiant que l'injecteur 10 sera parcouru par le courant électrique lors des phases de mesures de la résistivité électrique globale R7. Une première solution peut consister à accéder à la mesure de la résistivité électrique globale R7 entre la masse électrique définie par le corps de l'injecteur 12 et un fil connecté au corps de l'actionneur à solénoïde 14. Ce fil pourra avantageusement rejoindre la partie extérieure de l'injecteur 10 en suivant un jeu de rainures dans les pièces métalliques l'amenant jusqu'à un connecteur accessible par un moyen de mesure de la résistivité électrique globale R7. Ce fil accessible depuis l'extérieur de l'injecteur 10 est donc le fil de mesure de la résistivité électrique globale R7. Dans cette première solution, les ordres de grandeur des résistances R1, R2 et R3 pourront être de l'ordre de quelques dizaines d'ohms à des dizaines de kilo-ohms avec notamment de préférence une valeur de R2 deux fois plus grande que la valeur de R3. Cet ordre de grandeur permet une détection optimale du mouvement de l'aiguille d'injection 38 et plus particulièrement de pouvoir déterminer le temps de parcours de l'aiguille d'injection 38 entre sa position fermée et sa position en butée haute et inversement. Dans cette première solution, les ordres de grandeur des résistances R4, R5 et R6 pourront être supérieures à la centaine de kilo-ohms afin de limiter les courants de fuites vers le corps de l'injecteur 12 lors des phases de mesures. Une deuxième solution peut consister à ajouter une résistance électrique additionnelle entre le corps de l'actionneur à solénoïde 14 et un des fils de commande 15 de l'actionneur à solénoïde. De cette façon, la mesure de la résistivité électrique globale R7 se fait directement entre le fil de commande connecté à cette résistance électrique additionnelle et la masse électrique définie par le corps de l'injecteur 12. En d'autres termes, le fil de commande connecté à cette résistance électrique additionnelle est le fil de mesure de la résistivité électrique globale R7 de l'injecteur 10. Dans cette deuxième solution, les ordres de grandeur des résistances R1, R2 et R3 pourront être de l'ordre de quelques dizaines d'ohms avec notamment de préférence une valeur de R2 deux fois plus grande que la valeur de R3. Cet ordre de grandeur permet une détection optimale du mouvement de l'aiguille d'injection 38 et plus particulièrement de pouvoir déterminer le temps de parcours de l'aiguille d'injection 38 entre sa position fermée et sa position en butée haute et inversement. Dans cette deuxième solution, les ordres de grandeur des résistances R4, R5 et R6 pourront être supérieures à la dizaine de kilo-ohms afin de limiter les courants de fuites vers le corps de l'injecteur 12 lors des phases de mesures.

Une troisième solution peut consister à ajouter entre le corps de l'actionneur à solénoïde 14 et un des fils de commande 15 de l'actionneur à solénoïde une structure électronique parallèle comprenant une première résistance en série avec une première diode et une deuxième résistance en série avec une deuxième diode montée en sens opposé à la première diode. En d'autres termes, le fil de commande connecté à cette structure électronique est le fil de mesure de la résistivité électrique globale R7 de l'injecteur 10. La masse électrique peut-être définie par le corps de l'injecteur 12. Cette topologie permet avantageusement de maintenir constant le courant circulant dans l'injecteur 10 lors des phases d'ouverture et fermeture de l'aiguille d'injection 38. D'un point de vue électronique, cette topologie permet de maintenir une valeur absolue constante du courant de commande de l'actionneur à solénoïde lors des différences de tensions de commandes supportées par le solénoïde de l'actionneur. Avantageusement le rapport entre les valeurs de la première résistance et de la deuxième résistance de cette structure parallèle est de dix. La plus grande valeur de résistance est attribuée à la première résistance qui est traversée par le courant circulant dans l'injecteur 10 lorsque l'aiguille d'injection38 est en position fermée. Il est à noter que la polarisation de la première diode permet la circulation du courant du corps de l'actionneur à solénoïde 14 jusqu'au siège de l'aiguille d'injection 34 lorsque l'aiguille d'injection 38 est en position fermée, le courant finissant sa course au travers de la masse électrique définie par le corps de l'injecteur 12. La mesure de la résistivité électrique globale R7 est accessible entre le fil de commande de l'actionneur à solénoïde et la masse électrique définie par le corps de l'injecteur 12. Dans cette troisième solution, les ordres de grandeur des résistances R1, R2 et R3 pourront être de l'ordre de quelques dizaines d'ohms avec notamment de préférence une valeur de R2 deux fois plus grande que la valeur de R3. Cet ordre de grandeur permet une détection optimale du mouvement de l'aiguille d'injection 38 et plus particulièrement de pouvoir déterminer le temps de parcours de l'aiguille d'injection 38 entre sa position fermée et sa position en butée haute et inversement. Dans cette troisième solution, les ordres de grandeur des résistances R4, R5 et R6 pourront être supérieures à la dizaine de kilo-ohms afin de limiter les courants de fuites vers le corps de l'injecteur 12 lors des phases de mesures.

L'injecteur de carburant 10 agencé avec les revêtements de surface résistifs 40 peut-être diagnostiqué. Il s'agit de proposer une première méthode de mesure de la position et de la vitesse de l'aiguille d'injection 38 de l'injecteur 10 et également de mesurer le degré d'usure des revêtements de surface résistifs 40. La valeur de résistivité globale R7 de l'injecteur 10 mesurée à un instant donné peut être comparée avec les 3 valeurs ohmiques de résistivité électrique globale R7A, R7B et R7C connues. Si la valeur ohmique mesurée est comparable à la première valeur R7A alors l'aiguille d'injection 38 est dans sa position fermée, c'est-à-dire en butée basse dans son siège 34. Si la valeur ohmique mesurée est comparable à la troisième valeur R7C alors l'aiguille d'injection 38 en butée haute, c'est-à-dire en contact avec le plafond de la chambre de commande 30. Si la valeur ohmique mesurée est comparable à la deuxième valeur R7B alors l'aiguille d'injection 38 est dans sa course. Le sens de la course peut être déterminé en fonction de la valeur précédente, différente de R7B, mesurée. Si la valeur précédente de la résistivité électrique globale R7 mesurée était la première valeur R7A, alors le sens de la course de l'aiguille d'injection 38 est dit montant, c'est-à-dire du siège de l'aiguille d'injection 34 vers le plafond de la chambre de commande 30. Si la valeur précédente de la résistivité électrique globale R7 mesurée était la troisième valeur R7C, alors le sens de la course de l'aiguille d'injection est dit descendant, c'est-à-dire du plafond de la chambre de commande 30 vers le siège de l'aiguille d'injection 34. Pour mesurer la vitesse de l'aiguille d'injection 38, un échantillonnage extrêmement rapide, par exemple de l'ordre du dixième de la micro seconde, permet de déterminer l'écoulement temporel T entre chaque changement de valeur de résistivité électrique globale R7 mesurée. Connaissant le sens de la course de l'aiguille d'injection 38 mais également la distance à parcourir par l'aiguille d'injection 38 de sa position en butée basse jusqu'à sa position en butée haute, un calcul simple consistant à diviser la distance parcourue par le temps de parcours T permet de déterminer la vitesse de l'aiguille d'injection 38 dans les deux sens de parcours de l'aiguille d'injection 38. Il est à noter que la vitesse de l'aiguille d'injection 38 peut être différente selon le sens de déplacements de l'aiguille d'injection 38. Pour mesurer le degré d'usure des revêtements de surface résistifs 40 agencés dans l'injecteur 10, il suffit de comparer la valeur de la résistivité électrique globale R7 mesurée avec les 3 valeurs ohmiques de résistivité électrique globale R7A, R7B et R7C connues. Ces trois valeurs étant suffisamment distinctes l'une de l'autre, la valeur absolue identifiée du résultat le plus petit issue de la différence entre la valeur de la résistivité électrique globale mesurée R7 avec respectivement la première valeur R7A, la deuxième valeur R7B et la troisième valeur R7C à un instant donné est proportionnelle au degré d'usure des revêtements de surface résistifs 40. En d'autres termes, l'usure des revêtements de surface résistif 40 entraine une dérive de la résistivité électrique globale R7 de l'injecteur. Cette dérive peut permettre d'activer un signal d'alerte en cas de valeur estimée comme gênante pour le fonctionnement de l'injecteur 10. En outre, une méthode d'auto calibration périodique peut permettre une mise à jour régulière des valeurs de références de la résistivité électriques globale R7, c'est-à-dire une mise à jours des 3 valeurs ohmique de résistivité électrique globale R7A, R7B et R7C, permettant ainsi de s'affranchir des dérives de la résistivité électrique globale R7 due par exemple à la température

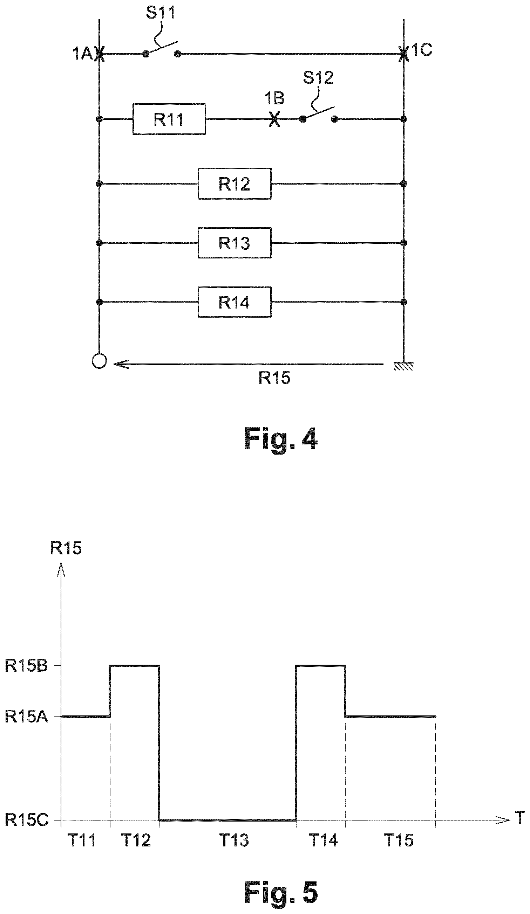

La figure 4 représente un deuxième exemple de la modélisation de la résistivité électrique globale équivalente R15 de l'injecteur de carburant 10 selon un deuxième agencement des revêtements de surface résistifs 40 sur les surfaces de contact S. Les revêtements de surface résistifs sont localisés:
- sur au moins une surface de contact S entre le siège 34 de l'aiguille d'injection et l'aiguille d'injection 38, rendant ainsi le contact intermittent de l'aiguille d'injection 38 avec son siège 34 résistif lorsque le contact est établi,
- sur au moins une surface de contact S entre le corps de la buse d'injection 26 et l'aiguille d'injection 38,
- sur au moins une surface de contact S entre le corps de la buse d'injection 26et l'entretoise 24, et
- sur au moins une surface de contact S entre l'entretoise 24 et le corps de la valve de contrôle 20.

Il est à noter que la résistivité électrique entre le corps de l'injecteur 12 et le corps de la buse d'injection 26 est quasi-nulle. Cela signifie qu'il n'y a pas de revêtement de surface résistif entre ces pièces métalliques. Alternativement un revêtement de surface non résistif ou de résistance très faible, c'est-à-dire à valeur ohmique nulle ou très faible, comme par exemple ayant une résistivité maximale de l'ordre de l'ohm, peut être agencé entre ces deux pièces métalliques pour des raisons de protection contre l'usure prématurée des pièces métalliques.
Il est à noter que la résistivité électrique entre le corps de l'injecteur 12 et le corps de la valve de contrôle 20 est quasi-nulle. Cela signifie qu'il n'y a pas de revêtement de surface résistif entre ces pièces métalliques. Alternativement un revêtement de surface non résistif ou de résistance très faible, c'est-à-dire à valeur ohmique nulle ou très faible, comme par exemple ayant une résistivité maximale de l'ordre de l'ohm, peut être agencé entre ces deux pièces métalliques pour des raisons de protection contre l'usure prématurée des pièces métalliques.
Il est à noter que la résistivité électrique entre l'aiguille d'injection 38 et le mur de la chambre de commande 32 est quasi nulle. Cela signifie qu'il n'y a pas de revêtement de surface résistif entre ces pièces métalliques. Alternativement un revêtement de surface non résistif ou de résistance très faible, c'est-à-dire à valeur ohmique nulle ou très faible, comme par exemple ayant une résistivité maximale de l'ordre de l'ohm, peut être agencé entre ces deux pièces métalliques pour des raisons de protection contre l'usure prématurée des pièces métalliques.

Dans ce mode de réalisation particulier on notera que lorsque l'aiguille d'injection 38 arrive en butée haute sur le plafond de la chambre de commande 30, la résistivité entre l'aiguille d'injection 38 et l'entretoise 24 est quasi nulle puisqu'il n'y a pas de revêtements de surface résistifs sur au moins une surface de contact S de ces pièces métalliques. Alternativement un revêtement de surface non résistif ou de résistance très faible, c'est-à-dire à valeur ohmique nulle ou très faible, comme par exemple ayant une résistivité maximale de l'ordre de l'ohm, peut être agencé entre ces deux pièces métalliques en contact pour des raisons de protection contre l'usure prématurée des pièces métalliques.

Selon la figure 4, le circuit électrique équivalent de l'injecteur 10 comprend un premier point 1A de contact équivalent au potentiel électrique de l'aiguille d'injection 38, de l'entretoise 24 et du mur de la chambre de commande 32, un deuxième point 1B de contact équivalent au potentiel électrique du siège 34 de l'aiguille d'injection, un troisième point 1C de contact équivalent au potentiel électrique du corps de la buse d'injection 26 et du plafond de la chambre de commande 30, un premier interrupteur S11 connecté entre le premier point 1A de contact et le troisième point 1C de contact, un deuxième interrupteur S 12 connecté entre le deuxième point 1B de contact et le troisième point 1C de contact, une première résistance R11 connectée entre le premier point 1A de contact et le deuxième point 1B de contact, une deuxième résistance R12 connectée entre le premier point 1A de contact et le troisième point 1C de contact, une troisième résistance R13 connectée entre le premier point 1A de contact et le troisième point 1C de contact et une quatrième résistance R14 connectée entre le premier point 1A de contact et le troisième point 1C de contact. Pour cette topologie, la résistivité électrique globale R15 de l'injecteur est donc mesurable entre le premier point 1A de contact et le troisième point 1C de contact. Afin de faciliter la mesure de la résistivité électrique globale R15 de cette configuration, le corps de l'injecteur 12 peut faire office de masse électrique.

Telle que décrite au travers de la figure 5, la résistivité électrique globale R15 de la topologie illustrée au travers de la figure 4 varie en fonction de la position de l'aiguille d'injection 38. Une première valeur R15A de la résistivité électrique globale R15 est mesurable lorsque l'aiguille d'injection 38 est en contact avec son siège 34. L'injecteur 10 est dit en position fermé. Cela se produit lors d'une première phase T11 en début de cycle d'injection et lors d'une cinquième phase T15 en fin de cycle d'injection. Durant la première phase T11 et la cinquième phase T15, le deuxième interrupteur S 12 est fermé puisque l'aiguille d'injection 38 est en contact avec son siège 34, alors que le premier interrupteur S11 est ouvert puisque l'aiguille d'injection 38 n'est pas en contact le plafond de la chambre de commande 30. Lorsque l'aiguille d'injection 38 effectue sa course vers le plafond de la chambre de commande 30, une deuxième valeur R15B de la résistivité électrique globale R15 est mesurable. L'injecteur 10 est alors dans une deuxième phase T12 correspondant au régime de début d'injection. Durant cette deuxième phase T12, le deuxième interrupteur S12 est ouvert puisque l'aiguille d'injection 38 n'est plus en contact avec son siège, et le premier interrupteur S11 est également ouvert puisque l'aiguille d'injection 38 n'est pas en contact avec le plafond de la chambre de commande 30. Lorsque l'aiguille d'injection 38 a terminé sa course en butée haute avec le plafond de la chambre de commande 30, l'injecteur 10 est dans une troisième phase T13 en régime établi d'injection. Durant cette troisième phase T13, une troisième valeur R15C de la résistivité électrique globale R15 est mesurable. Durant cette troisième phase T13, le deuxième interrupteur S12 est ouvert puisque l'aiguille d'injection 38 n'est plus en contact avec son siège 34, et le premier interrupteur S11 est fermé puisque l'aiguille d'injection 38 est en contact avec le plafond de la chambre de commande 30. Cette troisième valeur R15C de résistivité électrique globale R15 est alors quasi nulle. Lorsque l'injecteur 10 est en régime de fin d'injection, l'aiguille d'injection 38 effectue une course allant du plafond de la chambre de commande 30 vers son siège. L'injecteur est dans une quatrième phase T14. Durant cette quatrième phase T14 la valeur de la résistivité électrique globale R15 est équivalente à la deuxième valeur R15B identifiée lors de la phase de début d'injection puisque le premier interrupteur S11 et le deuxième interrupteur S12 sont ouverts, l'aiguille d'injection 38 n'étant ni en contact avec son siège 34, ni en contact avec le plafond de la chambre de commande 30. Afin d'accéder à la mesure de la résistivité électrique globale R15 de l'injecteur 10 dont les revêtements de surface résistifs 40 ont été disposés tels que décrit ci-dessus, de préférence plusieurs solutions sont applicables. Il est à noter que quel que soit la solution permettant d'accéder à la mesure de la résistivité électrique globale R15, le moyen associé à cette mesure induira un courant électrique au travers de la résistivité électrique globale R15, cela signifiant que l'injecteur 10 sera parcouru par le courant électrique lors des phases de mesures de la résistivité électrique globale R15. Une première solution peut consister à accéder à la mesure de la résistivité électrique globale R15 entre la masse électrique définie par le corps de l'injecteur 12 et un fil connecté au mur de la chambre de commande 32. Ce fil pourra avantageusement rejoindre la partie extérieure de l'injecteur en suivant un jeu de rainures dans les pièces métalliques l'amenant jusqu'à un connecteur accessible par un moyen de mesure de la résistivité électrique globale R15. L'utilisation des canaux de l'injecteur comme passage du fil ou encore le micro perçage du corps de l'injecteur 12 jusqu'à la chambre de commande 28 permettant le passage du fil pourra être également envisageable. Ce fil accessible depuis l'extérieur de l'injecteur est le fil de mesure de la résistivité électrique globale R15.

Une deuxième solution peut consister à ajouter une résistance électrique additionnelle entre le mur de la chambre de commande 32 et un des fils de commande 15 de l'actionneur à solénoïde. La mesure de la résistivité électrique globale R15 est accessible entre le fil de commande de l'actionneur à solénoïde connecté à cette résistance électrique additionnelle et la masse électrique définie par le corps de l'injecteur 12. En d'autres termes, le fil de commande connecté à cette résistance électrique est le fil de mesure de la résistivité électrique globale R15 de l'injecteur 10.

Une troisième solution peut consister à ajouter entre le mur de la chambre de commande 32 et un des fils de commande 15 de l'actionneur à solénoïde une structure électronique parallèle comprenant une première résistance en série avec une première diode et une deuxième résistance en série avec une deuxième diode montée en sens opposé à la première diode. En d'autres termes, le fil de commande connecté à cette structure électronique est le fil de mesure de la résistivité électrique globale R15 de l'injecteur. La masse électrique est définie par le corps de l'injecteur 12. Cette topologie permet avantageusement de maintenir constant le courant circulant dans l'injecteur lors des phases d'ouverture et fermeture de l'aiguille d'injection 38. D'un point de vue électronique, cette topologie permet de maintenir une valeur absolue constante du courant de commande de l'actionneur à solénoïde lors des différences de tensions de commandes supportées par le solénoïde de l'actionneur. Avantageusement le rapport entre les valeurs de la première résistance et la deuxième résistance de cette structure parallèle est de dix. La plus grande valeur de résistance est attribuée à la première résistance qui est traversée par le courant circulant dans l'injecteur 10 lorsque l'aiguille d'injection 38 est en position fermée. Il est à noter que la polarisation de la première diode permet la circulation du courant du corps de l'actionneur à solénoïde 14 jusqu'au siège de l'aiguille d'injection 34 lorsque l'aiguille d'injection 38 est en position fermée, le courant finissant sa course au travers de la masse électrique définie par le corps de l'injecteur 12. La mesure de la résistivité électrique globale R15 est accessible entre le fil de commande de l'actionneur à solénoïde et la masse électrique définie par le corps de l'injecteur 12.

## Revendications

1. Injecteur de carburant (10) comprenant
- des composants métalliques fixes, notamment un corps d'injecteur (12), un actionneur à solénoïde (14) muni d'un ressort de maintien (16) d'une tige de valve de contrôle (18), un corps de valve de contrôle (20) comprenant un siège de la tige de la valve de contrôle (22), une entretoise (24) entre le corps de la valve de contrôle (20) et une buse d'injection (26), une chambre de commande (28), et un siège d'aiguille d'injection (34),
- des composants métalliques mobiles notamment la tige de la valve de contrôle (18) et son armature (36) et l'aiguille d'injection (38),
ledit actionneur à solénoïde (14) comprenant également des fils de commande (15) communiquant à l'extérieur de l'injecteur (10),
les surfaces des composants métalliques en contact les uns avec les autres étant des surfaces de contact (S), dans lequel des revêtements de surface résistifs (40) sont agencés sur plusieurs surfaces de contact (S), et dans lequel la résistivité électrique globale (R7) de l'injecteur (10) entre le corps de l'actionneur à solénoïde (14) et le corps de l'injecteur (12) varie de trois valeurs ohmiques distinctes (R7A, R7B, R7C) par intermittence suivant la cinétique de l'aiguille d'injection (38) de l'injecteur (10), **caractérisé en ce que** les revêtements de surface résistifs (40) sont localisés:
sur au moins une surface de contact (S) entre le siège (34) de l'aiguille d'injection (38) et l'aiguille d'injection (38),
sur au moins une surface de contact (S) entre le corps de la buse d'injection (26) et l'aiguille d'injection (38),
sur au moins une surface de contact (S) entre l'aiguille d'injection (38) et l'entretoise (24),
sur au moins une surface de contact (S) entre le corps de la buse d'injection (26) et l'entretoise (24),
sur au moins une surface de contact (S) entre le corps de l'injecteur (12) et le corps de la valve de contrôle (20),
sur au moins une surface de contact (S) entre le corps de l'injecteur (12) et le corps de l'actionneur à solénoïde (14).

2. Injecteur de carburant (10) selon la revendication précédente comprenant une résistance électrique additionnelle connectée entre le corps de l'actionneur à solénoïde (14) et un de ses fils de commande (15), ledit fil de commande étant le fil de mesure de la résistivité électrique globale (R7).

3. Injecteur de carburant (10) selon la revendication 1 comprenant un circuit électrique à topologie parallèle connecté entre le corps de l'actionneur à solénoïde (14) et un des fils de commande (15) de l'actionneur, ledit fil de commande étant le fil de mesure de la résistivité électrique globale (R7), ledit circuit électrique parallèle comprenant une première résistance électrique en série avec une première diode et une seconde résistance électrique en série avec une deuxième diode montée en sens opposé à la première diode.

4. Injecteur de carburant (10) selon la revendication 1 comprenant un fil connecté au corps de l'actionneur à solénoïde (14), ledit fil rejoignant la partie extérieure de l'injecteur (10) est le fil de mesure de la résistivité électrique globale (R7).

5. Injecteur de carburant (10) selon l'une quelconque des revendications précédentes selon lequel chaque revêtement de surface résistifs (40) agencés sur les surfaces de contact (S) est de la famille des carbones amorphes (a-C) ou de type céramique.

## Patentansprüche

1. Kraftstoffeinspritzventil (10), enthaltend:
- feststehende Metallteile, insbesondre einen Ventilkörper (12), ein Solenoidstellglied (14), das mit einer Haltefeder (16) zum Halten eines Steuerventilschaft (18) versehen ist, einen Steuerventilkörper (20) mit einem Steuerventilschaftsitz (22), eine Verstrebung (24) zwischen dem Steuerventilkörper (20) und einer Einspritzdüse (26), einen Steuerraum (28) und einen Einspritznadelsitz (34),
- bewegliche Metallteile, insbesondere den Steuerventilschaft (18) und dessen Anker (36) und die Einspritznadel (38),
wobei das Solenoidstellglied (14) auch Steuerleitungen (15) aufweist, die mit dem Außenraum des Einspritzventils (10) kommunizieren,
wobei die in Kontakt miteinander stehenden Oberflächen der Metallteile Kontaktflächen (S) sind,
wobei
resistive Oberflächenbeschichtungen (40) an mehreren Kontaktflächen (S) angeordnet sind, und
der spezifische elektrische Gesamtwiderstand (R7) des Einspritzventils (10) zwischen dem Körper des Solenoidstellglieds (14) und dem Körper des Einspritzventils (12) je nach Kinetik der Einspritznadel (38) des Einspritzventils (10) um drei verschiedene Widerstandswerte (R7A, R7B, R7C) intermittierend variiert,
**dadurch gekennzeichnet, dass**
die resistiven Oberflächenbeschichtungen (40) angeordnet sind auf:
zumindest einer Kontaktfläche (S) zwischen dem Sitz (34) der Einspritznadel (38) und der Einspritznadel (38),
zumindest einer Kontaktfläche (S) zwischen dem Körper der Einspritzdüse (26) und der Einspritznadel (38),
zumindest einer Kontaktfläche (S) zwischen der Einspritznadel (38) und der Verstrebung (24),
zumindest einer Kontaktfläche (S) zwischen dem Körper der Einspritzdüse (26) und der Verstrebung (24),
zumindest einer Kontaktfläche (S) zwischen dem Körper des Einspritzventils (12) und dem Körper des Steuerventils (20),
zumindest einer Kontaktfläche (S) zwischen dem Körper des Einspritzventils (12) und dem Körper des Solenoidstellglieds (14).

2. Kraftstoffeinspritzventil (10) nach dem vorangehenden Anspruch, enthaltend einen zusätzlichen elektrischen Widerstand, der zwischen dem Körper des Solenoidstellglieds (14) und einer seiner Steuerleitungen (15) angeschlossen ist, wobei die Steuerleitung die Messleitung zum Messen des spezifischen elektrischen Gesamtwiderstands (R7) ist.

3. Kraftstoffeinspritzventil (10) nach Anspruch 1, enthaltend einen Stromkreis mit paralleler Topologie, der zwischen dem Körper des Solenoidstellglieds (14) und einer der Steuerleitungen (15) des Stellglieds angeschlossen ist, wobei die Steuerleitung die Messleitung zum Messen des spezifischen elektrischen Gesamtwiderstands (R7) ist, wobei der parallele Stromkreis einen ersten elektrischen Widerstand in Reihe mit einer ersten Diode und einen zweiten elektrischen Widerstand in Reihe mit einer zweiten Diode aufweist, die in Gegenrichtung zur ersten Diode geschaltet ist.

4. Kraftstoffeinspritzventil (10) nach Anspruch 1, enthaltend eine Leitung, die mit dem Körper des Solenoidstellglieds (14) verbunden ist, wobei die mit dem Außenteil des Einspritzventils (10) verbundene Leitung die Messleitung zum Messen des spezifischen elektrischen Gesamtwiderstands (R7) ist.

5. Kraftstoffeinspritzventil (10) nach einem der vorangehenden Ansprüche, wobei jede der resistiven Oberflächenbeschichtungen (40), die an den Kontaktflächen (S) angeordnet sind, aus der Familie der amorphen Kohlenstoffe (a-C) oder vom keramischen Typ ist.

## Claims

1. Fuel injector (10) comprising
- fixed metal components, in particular an injector body (12), a solenoid actuator (14) equipped with a retaining spring (16) that holds a control valve stem (18), a control valve body (20) comprising a seat for the control valve stem (22), a spacer (24) between the body of the control valve (20) and an injection nozzle (26), a control chamber (28), and an injection needle seat (34),
- movable metal components, in particular the control valve stem (18) and the armature (36) thereof and the injection needle (38),
said solenoid actuator (14) also comprising control wires (15) communicating with the outside of the injector (10),
those surfaces of the metal components that are in contact with one another being contact surfaces (S),
wherein resistive surface coatings (40) are arranged on a number of contact surfaces (S), and wherein the overall electrical resistivity (R7) of the injector (10) between the body of the solenoid actuator (14) and the body of the injector (12) varies by three distinct ohm values (R7A, R7B, R7C) intermittently according to the kinetics of the injection needle (38) of the injector (10), **characterized in that** the resistive surface coatings (40) are located:
on at least one contact surface (S) between the seat (34) of the injection needle (38) and the injection needle (38),
on at least one contact surface (S) between the body of the injection nozzle (26) and the injection needle (38),
on at least one contact surface (S) between the injection needle (38) and the spacer (24),
on at least one contact surface (S) between the body of the injection nozzle (26) and the spacer (24),
on at least one contact surface (S) between the body of the injector (12) and the body of the control valve (20), and
on at least one contact surface (S) between the body of the injector (12) and the body of the solenoid actuator (14).

2. Fuel injector (10) according to the preceding claim, comprising an additional electrical resistor connected between the body of the solenoid actuator (14) and one of the control wires (15) thereof, said control wire being the wire for measuring the overall electrical resistivity (R7).

3. Fuel injector (10) according to Claim 1, comprising an electric circuit with parallel topology connected between the body of the solenoid actuator (14) and one of the control wires (15) of the actuator, said control wire being the wire for measuring the overall electrical resistivity (R7), said parallel electric circuit comprising a first electrical resistor in series with a first diode and a second electrical resistor in series with a second diode mounted in a direction opposite to the first diode.

4. Fuel injector (10) according to Claim 1, comprising a wire connected to the body of the solenoid actuator (14), said wire joining the outer part of the injector (10) being the wire for measuring the overall electrical resistivity (R7).

5. Fuel injector (10) according to any one of the preceding claims, each resistive surface coating (40) arranged on the contact surfaces (S) being from the family of amorphous carbons (a-C) or of the ceramic type.
